Europäisches Patentamt

European Patent Office

Office européen des brevets

(11) Veröffentlichungsnummer: **0 076 247**
**B1**

(12) # EUROPÄISCHE PATENTSCHRIFT

(45) Veröffentlichungstag der Patentschrift:
05.11.86

(51) Int. Cl.⁴: **B 62 K 19/18**, B 62 K 21/04

(21) Anmeldenummer: **82890116.5**

(22) Anmeldetag: **06.08.82**

(54) **Muffenverbindung für Bauelemente von Fahrrädern od.dgl.**

(30) Priorität: **30.09.81 AT 4183/81**

(43) Veröffentlichungstag der Anmeldung:
**06.04.83 Patentblatt 83/14**

(45) Bekanntmachung des Hinweises auf die Patenterteilung:
**05.11.86 Patentblatt 86/45**

(84) Benannte Vertragsstaaten:
**BE CH DE FR GB LI NL SE**

(56) Entgegenhaltungen:
**BE-A-437 605**
**BE-A-459 284**
**DE-C-822 342**
**FR-A-882 471**
**FR-A-955 850**

**Die Akte enthält technische Angaben, die nach
dem Eingang der Anmeldung eingereicht wurden
und die nicht in dieser Patentschrift enthalten sind.**

(73) Patentinhaber: **Steyr- Daimler- Puch
Aktiengesellschaft, Kärntnerring 7, A-1010 Wien
(AT)**

(72) Erfinder: **Schmid , Peter Ernst, Dipl.- Ing. Dr.,
Harmsdorfgasse 60, A-8042 Graz (AT)**
Erfinder: **Volk, Franz, Liebenauer Hauptstrasse 309,
A-8041 Graz (AT)**

## Beschreibung

Die Erfindung bezieht sich auf eine Muffenverbindung für rohrförmige Bauelemente von Fahrrädern od.dgl. mit einem im Kokillenguß hergestellten Verbindungsstück, bei der sowohl die Bauelemente als auch das Verbindungsstück aus Leichtmetallegierungen bestehen.

Eine solche Muffenverbindung ist bereits aus der BE-A-459 284 bekannt, bei der in einer Kokille ein Verbindungselement um Rohrenden gegossen wird, wobei sowohl die Bauelemente (Rohre) als auch das Verbindungselement aus Leichtmetall-Legierungen bestehen. Da durch den Temperaturanstieg beim Gießen in der Verbindung der Härteeffekt verloren geht, werden dort konstruktive Maßnahmen vorgeschlagen, nämlich die Verwendung von Einsatzstücken, die in den Rohrendstücken angeordnet sind. Dadurch soll die Festigkeit der Verbindung verbessert werden, wobei für die Wahl der Materialien keine näheren Angaben gemacht werden. Für das gegossene Verbindungselement kann auch Aluminium verwendet werden, wobei die Gießtemperatur und die Art der Abkühlung das Rohrmaterial nicht verändern dürfen. Abgesehen davon, daß sich eine solche Veränderung beim Guß kaum vermeiden läßt, wird nichts darüber ausgesagt, welche Maßnahmen getroffen werden müssen, um die Festigkeit und Homogenität der ganzen Verbindung, also der Rohre und des Verbindungselementes herzustellen. Ein besonderer Nachteil der bekannten Muffenverbindung besteht in der Gewichtserhöhung durch die in den Rohrendstücken angeordneten Einsatzstücke.

Es ist auch eine Muffenverbindung für eine Vorderradgabel bekannt geworden (deutsches Patent DE-C- 822 342), bei der Gabelrohre aus gezogenem Material mittels Leichtmetall-Kokillenguß zur Bildung der Vorderradgabel verbunden sind. Verwendet man nun herkömmliche Bauelemente, z.B. Rohre aus gezogenem Stahl, so läßt sich wegen der Schwere dieser Bauelemente trotz des aus Leichtmetall gefertigten Verbindungsstückes nicht das erwünschte geringe Gewicht des betreffenden Bauteiles erzielen. Ähnliches gilt für einen Fahrradrahmen, für dessen Muffenverbindungen von Stahlrohren ein Kokillengußverfahren vorgeschlagen wurde, bei dem durch Druckguß drei Verbindungsmuffen aus einer Aluminiumlegierung in einem Arbeitsgang gebildet werden (Technical Paper No 13 The Society of Die Casting Engineers, Inc., November 1964). Auch hier läßt sich keine genügende Gewichtseinsparung erzielen.

Aufgabe der Erfindung ist es daher, eine Muffenverbindung der eingangs geschilderten Art zu schaffen, bei der sich unter Beibehaltung einer beanspruchungsgerechten Bauteilfestigkeit und niedriger Herstellkosten eine erhebliche Gewichtseinsparung ergibt.

Die Erfindung löst die gestellte Aufgabe dadurch, daß die Leichtmetallegierung der Bauelemente einerseits und die Leichtmetallegierung des Verbindungsstückes anderseits nach einem Lösungsglühen aushärtbare Aluminiumlegierungen sind, wobei die Aluminiumlegierung der Bauelemente etwa den gleichen Wärmeausdehnungskoeffizienten wie die Aluminiumlegierung des Verbindungsstückes aufweist und die Bedingungen für das Lösungsglühen bei den Bauelementen und beim Verbindungsstück im wesentlichen gleich sind.

Erfindungsgemäß werden also an Stelle von Stahlrohren Bauelemente aus einer Aluminiumlegierung eingesetzt und dadurch die gewünschten Gewichtseinsparungen erzielt. Allerdings müssen dabei besondere Forderungen erfüllt sein, die bisher unbeachtet blieben, so daß die Fachwelt von der Verwendung von Bauelementen aus Leichtmetall bei im Kokillenguß hergestellten Verbindungsstücken Abstand nahm. Die in die gegossenen Verbindungsstücke eingebetteten Enden der zu verbindenden Bauelemente werden nämlich infolge der Erhitzung beim Gießvorgang auf etwa 650° C einer Änderung des Kristallgitters unterworfen. Durch diese einem Weichglühen gleichkommende Erhitzung geht die Kristallgitterspannung verloren, auf der die Festigkeit des Werkstückes beruht. Um einen solchen nachteiligen Effekt zu vermeiden, ist man dazu übergegangen, die Verbindungen der Bauelemente mittels Kleben herzustellen. Das ist zwar unter Beibehaltung der geforderten Bauteilfestigkeit durchführbar, wenn es sich um kreisrunde Rohre u.dgl. handelt, weil sich dann die erforderliche Passungsgenauigkeit mit vertretbarem Bearbeitungsaufwand herstellen läßt. Geht es jedoch um die Verbindung unrunder Rohre, wie z.B. Gabelscheiden von Vorderradgabeln, wäre der Bearbeitungsaufwand unwirtschaftlich hoch und kaum eine ausreichende Paßgenauigkeit erreichbar.

Die erfindungsgemäß Muffenverbindung ist dagegen in wirtschaftlicher Weise bei beliebig gestalteten zu verbindenden Bauelementen verwendbar. Durch die etwa gleichen Wärmeausdehnungskoeffizienten in der ganzen Verbindung kann es zu keinen Lockerungen beim Abkühlen nach dem Guß kommen. Das Lösungsglühen hat zur Folge, daß die Legierungselemente im Kristallgitter des Grundmaterials in Lösung gehen. Beim nachfolgenden Abschrecken können dann die Legierungselemente nicht mehr aus dem Kristallgitter auswandern und dieses erhält durch die sich ergebende Verspannung die gewünschte Festigkeit. Durch die erfindungsgemäße Werkstoffwahl mit innerhalb der Muffenverbindung im wesentlichen gleichen Bedingungen für das Lösungsglühen wird sichergestellt, daß die Verfestigung sowohl bei den zu verbindenden Bauelementen als auch beim gegossenen Verbindungsstück in gleicher Weise eintritt.

Um besonders billige, leicht einsetzbare Füllstopfen zu erzielen, bestehen diese aus dem lichten Querschnitt der Gabelscheiden angepaßten ebenen Blechplatten mit aus der Plattenebene abgewinkelten hakenförmigen Armen, die die Gabelscheidenenden übergreifen. Es handelt sich also um einfache Massenprodukte, die durch die Wandöffnungen in den Gabelscheiden-Endabschnitten für den Durchtritt des Gußmaterials eine gute und sichere Verbindung der Gabelscheiden-Endabschnitte mit dem Verbindungsstück gewährleisten.

In der Zeichnung ist der Erfindungsgegenstand beispielsweise dargestellt, und zwar zeigen

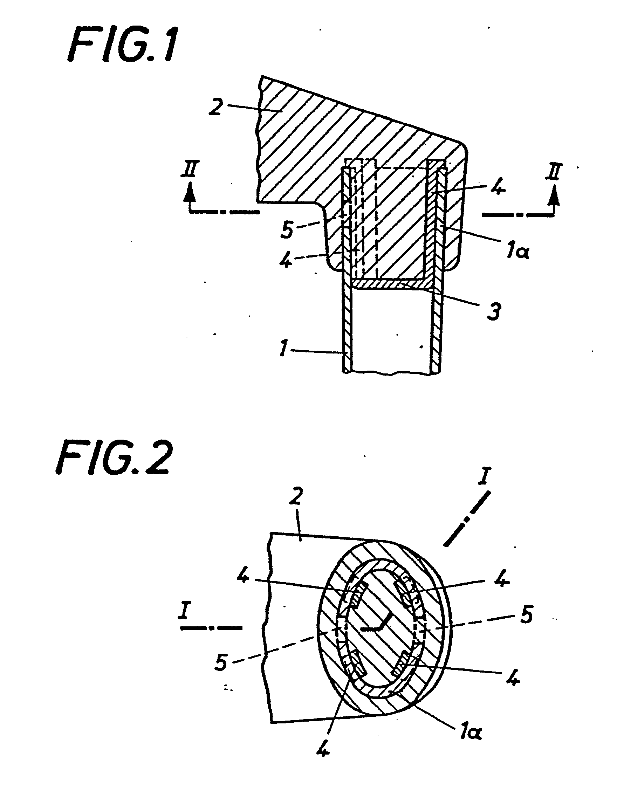

Fig. 1 einen Teil einer Vorderradgabel eines Fahrrades im Schnitt nach der Linie I-I der Fig. 2 und

Fig. 2 einen Querschnitt nach der Linie II-II der Fig. 1.

Zur Muffenverbindung der beiden Gabelscheiden 1, von denen nur eine dargestellt ist, ist die als Verbindungsstück dienende Gabelbrücke 2 vorgesehen, die in der Kokille um die Endabschnitte 1a der Gabelscheiden 1 herumgegossen ist und aus einer aushärtbaren Alumimiumlegierung besteht. Auch die Gabelscheiden 1 sind aus einer aushärtbaren Aluminiumlegierung hergestellt, welche etwa den gleichen Wärmeausdehnungskoeffizienten wie die Aluminiumlegierung der Gabelbrücke 2 aufweist und auch etwa die gleichen Bedingungen für das Lösungsglühen erfordert. Um ein Eindringen des Gußwerkstoffes in das Scheideninnere zu verhindern, sind die Endabschnitte 1a der Gabelscheiden 1 durch Füllstopfen verschlossen. Diese Füllstopfen bestehen aus einer Blechplatte 3, die dem lichten Querschnitt der Gabelscheiden 1 angepaßt ist und aus der Plattenebeneabgewinkelte Arme 4 besitzt, mit denen sie das Gabelscheidenende hakenförmig übergreift. Die Endabschnitte 1a der Gabelscheiden 1 sind zwischen den Scheidenenden und der Blechplatte 3 mit Wandöffnungen 5 versehen.

**Patentansprüche**

1. Muffenverbindung für rohrförmige Bauelemente (1) von Fahrrädern od.dgl. mit einem im Kokillenguß hergestellten Verbindungsstück (2), bei der sowohl die Bauelemente als auch das Verbindungsstück aus Leichtmetallegierungen bestehen, dadurch gekennzeichnet, daß die Leichtmetallegierung der Bauelemente (1) einerseits und die Leichtmetallegierung des Verbindungsstückes (2) anderseits nach einem Lösungsglühen aushärtbare Aluminiumlegierungen sind, wobei die Aluminiumlegierung der Bauelemente (1) etwa den gleichen Wärmeausdehnungskoeffizienten wie die Aluminiumlegierung des Verbindungsstückes (2) aufweist und die Bedingungen für das Lösungsglühen bei den Bauelementen (1) und beim Verbindungsstück im wesentlichen gleich sind.

2. Muffenverbindung nach Anspruch 1 für eine Vorderradgabel, deren Gabelscheiden (1) in ihren in der Gabelbrücke (2) eingegossenen Endabschnitten (1a) durch Füllstopfen (3, 4) verschlossen sind, dadurch gekennzeichnet, daß die Füllstopfen aus dem lichten Querschnitt der Gabelscheiden (1) angepaßten ebenen Blechplatten (3) mit aus der Plattenebene abgewinkelten hakenförmigen Armen (4) bestehen, die die Gabelscheidenenden übergreifen.

**Claims**

1. A spigot-and-socket joint for tubular components (1) of bicycles or the like, having a connecting member (2) produced by chill casting, wherein both the components and the connecting member consist of light metal alloys, characterized in that the light metal alloy of the components (1) on the one hand and the light metal alloy of the connecting member (2) on the other hand are aluminium alloys which are age-hardenad after solution treatment, the aluminium alloy of the components (1) having approximately the same coafficient of thermal expansion as the aluminium alloy of the connecting member (2), and the conditions for the solution treatment being essentially similar in the case of the components (1) and in the cass of the connecting member (2).

2. A spigot-and-socket joint according to Claim 1 for a front-wheel fork, the fork blades (1) thereof being closed by fill plugs (3, 4) in their end portions (1a) integrally cast in the fork bridge (2), characterized in that the fill plugs comprise flat metal plates (3) adapted to the inside cross-section of the fork blades (1) and having hook-shaped arms (4) which are angled away from the plane of the plates and which engage over the ends of the fork blades.

**Revendications**

1. Raccordement par manchon pour éléments tubulaires de construction de cycle ou analogue avec un élément de liaison (2) réalisé par coulée en coquille, dans lequel aussi bien les éléments de construction que l'élément de liaison sont fabriqués en alliage de métal léger, caractérisé en ce que l'alliage de métal léger des éléments de construction (1), d'une part, et l'alliage de métal léger de l'élément de liaison (2), d'autre part, sont des alliages d'aluminium aptes au durcissement structurel après un recuit de mise en solution, l'alliage d'aluminium des éléments de construction (1) ayant un coefficient de dilatation thermique sensiblement égal à celui de l'alliage d'aluminium de l'élément de liaison (2), et les conditions d'exécution du recuit de mise en solution étant sensiblement identiques pour les éléments de construction (1) et pour l'élément de liaison (2).

2. Raccordement par manchon selon la revendication 1 pour une fourche de roue avant, dont les branches de fourche (1) sont obturées par des bouchons d'arrêt de remplissage (3, 4) dans leurs parties terminales (1a) fixées par coulage dans la chape de fourche (2), caractérisé par le fait que les bouchons d'arrêt du remplissage sont constitués par des plaquettes en tôle plane (3) adaptées à la section transversale intérieure des pattes de fourche (1), comprenant des bras (4) analogues à des crochets étendus par pliage en dehors du plan de la plaquette, qui s'accrochent par le dessus aux extrémités des branches de fourche.

# FIG.1

# FIG.2